# EUROPEAN PATENT APPLICATION

(11) **EP 4 461 608 A1**
(43) Date of publication of application: **13.11.2024**
(21) Application number: 23212148.3
(22) Date of filing: 24.11.2023
(51) Int. Cl.: B60S 1/50, B60S 1/48

(54) **WINDSHIELD WASHER RESERVOIR**

(30) Priority: 10.05.2023 TW 112117386; 10.05.2023 TW 112204593 U
(71) Applicant: Tsao, Yu-Min, Keelung City 200002 (TW)
(72) Inventor: Tsao, Yu-Min, Keelung City 200002 (TW)
(74) Representative: Cabinet Chaillot

(57) **Abstract**

A windshield washer reservoir, comprising a first tank (10) for containing first liquid, comprising a first front pump (12); a second tank (20) for containing second liquid, comprising a second front pump (22), wherein the first front pump and the second front pump (22) are merged to be connected to a windshield washer nozzle apparatus (B); a first control device (30), electrically connected to the first front power connector (121), for controlling the first front pump (12) to output the first liquid; a second control device (40), electrically connected to the second power connector, for controlling the second front pump (22) to output the second liquid.

## Description

### BACKGROUND OF THE INVENTION

### 1. Field of the Invention

The present invention relates to a windshield washer reservoir, particularly to a car windshield wiper water tank that can be filled with water and cleaning fluid separately.

### 2. Description of the Prior Art

Windshield washer nozzle apparatus are generally located on or below the windshield of an automobile, on the hood, or on the wiper arm. Windshield washer nozzle apparatus are primarily used to spray water onto the outer surface of the car's windshield, in conjunction with the back-and-forth motion of the wipers, to remove dirt adhering to the outer surface of the windshield.

However, the conventional windshield washer reservoir only comprises a container, and the user can only choose to use the clean water only or mix the clean water with the detergent by himself, often failing to meet the user's cleaning needs. The inability to independently spray water or apply cleaning solution, often resulting in incomplete windshield cleaning when needed, can also cause a driving hazard. Therefore, there is still a need to improve the windshield washer fluid reservoir.

### SUMMARY OF THE INVENTION

In view of the above-mentioned drawbacks, the present invention provides a windshield washer reservoir comprises a first tank for containing first liquid, comprising a first input port and a first front pump, wherein the first front pump comprises a first front power connector and is connected to a first front washer hose; a second tank for containing second liquid, comprising a second input port (21) and a second front pump, wherein the second front pump comprises a second front power connector and is connected to a second front washer hose, wherein the first front washer hose and the second front washer hose are merged to be connected to a windshield washer nozzle apparatus; a first control device, electrically connected to the first front power connector, for controlling the first front pump to output the first liquid; a second control device, electrically connected to the second front power connector, for controlling the second front pump to output the second liquid.

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:
- FIG. 1: illustrates the three-dimensional illustration of the invention;
- FIG. 2: illustrates a schematic diagram depicting the separate arrangement of the first tank and the second tank of the invention;
- FIG. 3: illustrates a schematic diagram depicting another separate arrangement of the first tank and the second tank of the invention;
- FIG. 4: illustrates a block diagram of the control device of the invention;
- FIG. 5: illustrates a schematic diagram of the windshield washer nozzle apparatus of the invention;
- FIG. 6: illustrates a three-dimensional representation of the second embodiment of the invention.

### DETAILED DESCRIPTION OF THE PREFERRED EMBODIMENTS

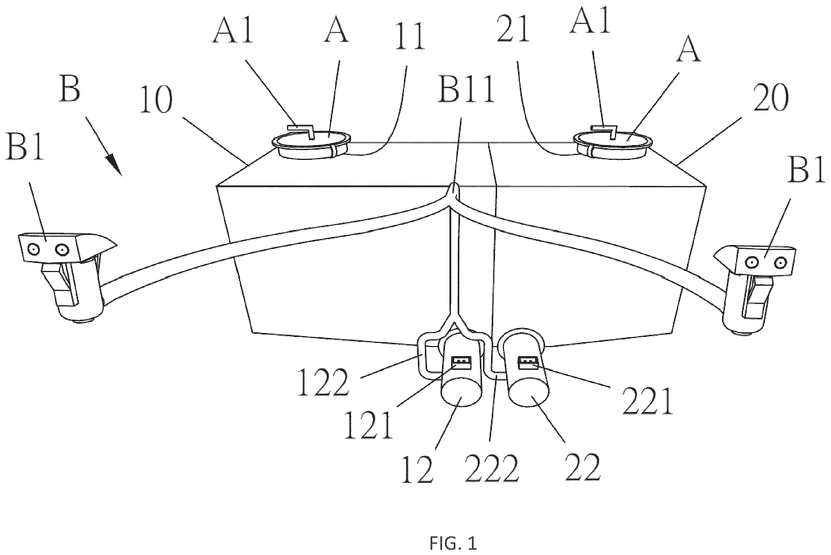

In order to facilitate the explanation of the content and achievements of the present invention, specific embodiments are listed in conjunction with the diagrams. Please refer to Figure 1, the first embodiment of the present invention, a windshield washer reservoir comprises a first tank 10 for containing the clean water, comprising the first input port 11 and the first front pump 12, wherein the first front pump 12 comprises the first front power connector 121 and is connected to the first front washer hose 122.

A second tank 20 for containing detergent, comprising the second input port 21 and the second front pump 22, wherein the second front pump 22 comprises the second front power connector 221 and is connected to the second front washer hose 222.

Each of the first input port 11 of the first tank 10 and the second input port 21 of the second tank 20 comprises a cover A, wherein a ventilation tube A1 is provided on the cover A, but not limited to be on the cover.

The first front washer hose 122 and the second front washer hose 222 are merged to be connected to a windshield washer nozzle apparatus B.

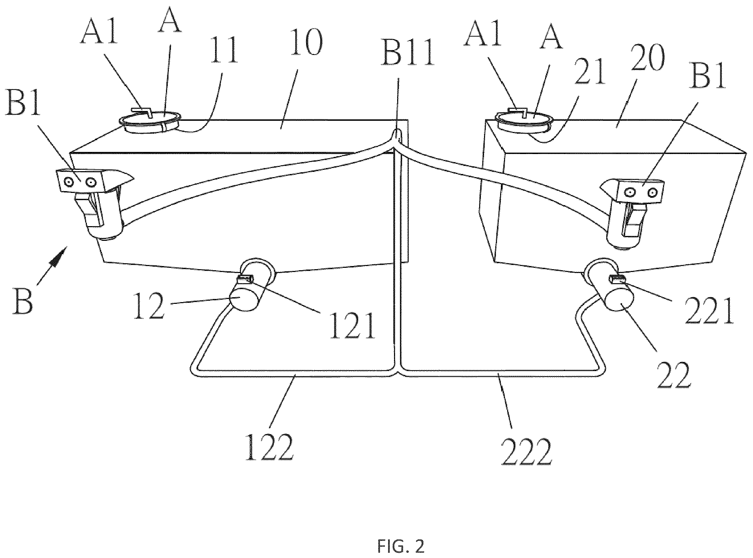

Please refer to Figure 1 and Figure 2, in this embodiment, the first tank 10 and the second tank 20 are joined together side by side or there is a predetermined distance between the first tank 10 and the second tank 20.

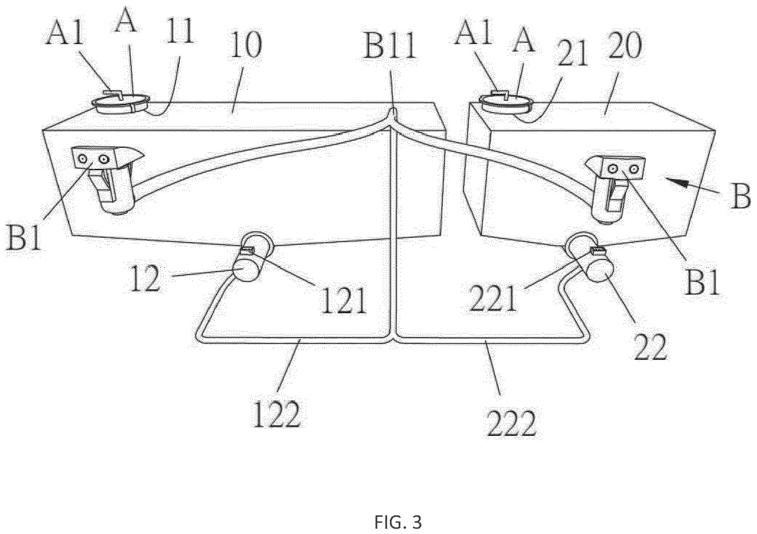

Please refer to Figure 3, in this embodiment, the capacity of the first tank 10 is bigger than the capacity of the second tank 20, but it is not limited to the embodiment.

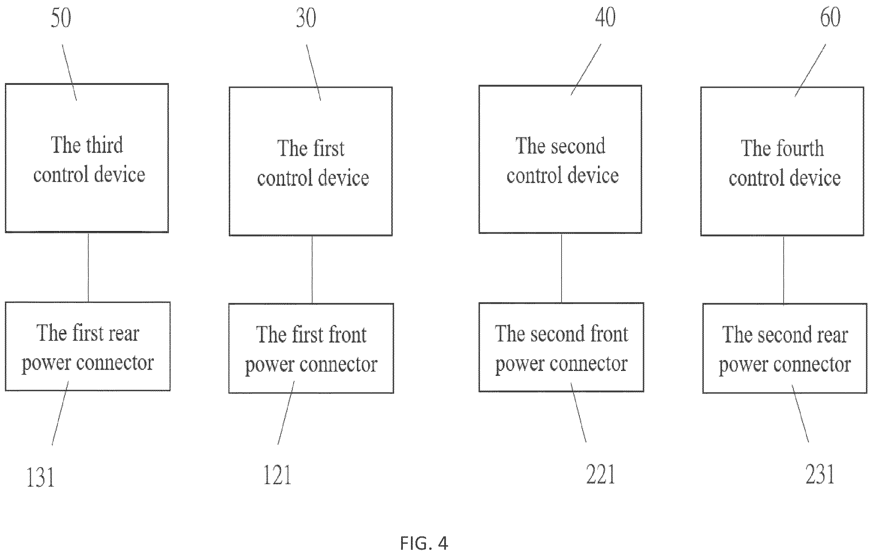

Please refer to Figure 4, the first control device 30 is electrically connected to the first front power connector 121, for controlling the first front pump 12 to output the clean water, allowing the clean water to be sprayed onto the car's front windshield through the windshield washer nozzle apparatus B.

The second control device 40, electrically connected to the second front power connector 221, for controlling the second front pump 22 to output the detergent, allowing the detergent to be sprayed onto the car's front windshield through the windshield washer nozzle apparatus B.

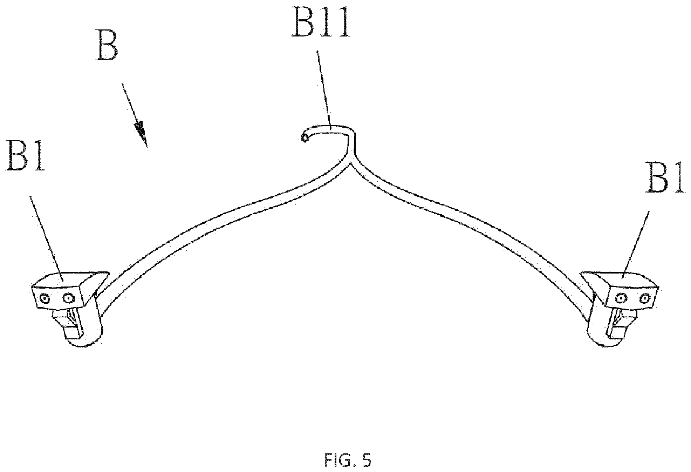

Please refer to Figure 1 and Figure 5, the windshield washer nozzle apparatus B comprises a plurality of front nozzles B1, wherein the first front washer hose 122 and the second front washer hose 222 are merged to be connected to each of the front nozzles B1 through a first output hose B11, wherein each of the front nozzles B1 faces the front windshield. This allows the user to control the amount of the clean water and detergent respectively through the first control device 30 and the second control device 40, achieving the purpose of cleaning the front windshield.

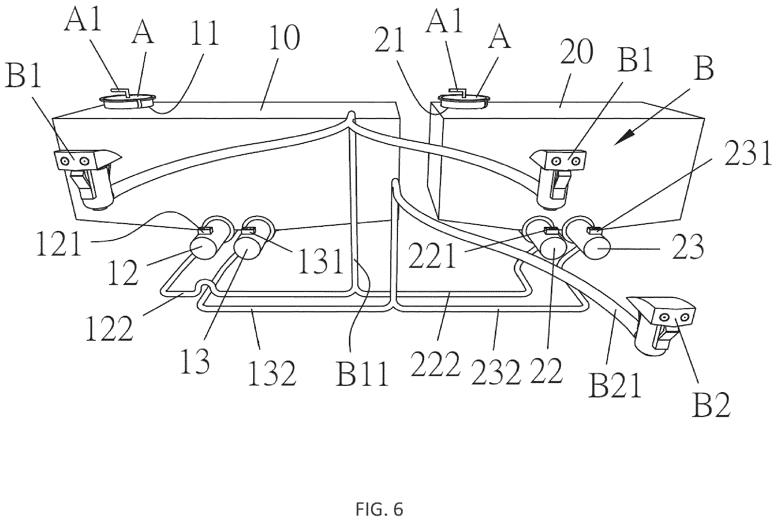

Please refer to Figure 4 and Figure 6, for the second embodiment of the present invention. Because the main structure is the same as the previous embodiment, the same parts will not be described again but will be briefly mentioned.

In this embodiment, the first tank 10 is additionally equipped with the first rear pump 13, wherein the first rear pump 13 comprises the first rear power connector 131 and is connected to the first rear washer hose 132.

The second tank 20 is additionally equipped with the second rear pump 23, wherein the second rear pump 23 comprises the second rear power connector 231 and is connected to the second rear washer hose 232, wherein the first rear washer hose 132 and the second rear washer hose 232 are merged to be connected to the windshield washer nozzle apparatus B.

The third control device 50 is electrically connected to the first rear power connector 131, for controlling the first rear pump 13 to output the clean water, allowing the clean water to be sprayed onto the car's rear windshield through the windshield washer nozzle apparatus B.

The fourth control device 60 is electrically connected to the second rear power connector 231, for controlling the second rear pump 23 to output the cleaning fluid, allowing cleaning fluid to be sprayed onto the car's rear windshield through the windshield washer nozzle apparatus B.

In this embodiment, the windshield washer nozzle apparatus B further comprises the rear nozzle B2, connected to the second output hose B21, wherein the first rear washer hose 132 and the second rear washer hose 232 are merged to be connected to the rear nozzles B2 through the second output hose B21, wherein the rear nozzles face the rear windshield.

In summary, this embodiment adds the capability to clean the rear windshield, thereby enhancing the driving safety.

## Claims

1. A windshield washer reservoir, comprising:
a first tank (10) for containing first liquid, comprising a first input port (11) and a first front pump (12);
a second tank (20) for containing second liquid, comprising a second input port (21) and a second front pump (22);
a first control device (30), electrically connected to the first front power connector (121), for controlling the first front pump (12) to output the first liquid;
a second control device (40), electrically connected to the second front power connector (221), for controlling the second front pump (22) to output the second liquid; **characterized in that**:
the first front pump (12) comprises a first front power connector (121) and is connected to a first front washer hose (122);
wherein the second front pump (22) comprises a second front power connector (221) and is connected to a second front washer hose (222), wherein the first front washer hose (122) and the second front washer hose (222) are merged to be connected to a windshield washer nozzle apparatus (B).

2. The windshield washer reservoir of claim 1, **characterized in that** the capacity of the first tank (10) is greater than the capacity of the second tank (20).

3. The windshield washer reservoir of claim 1, **characterized in that** the first tank (10) and the second tank (20) are joined together side by side.

4. The windshield washer reservoir of claim 1, **characterized in that** there is a predetermined distance between the first tank (10) and the second tank (20).

5. The windshield washer reservoir of claim 1, **characterized in that** the windshield washer nozzle apparatus (B) comprises a plurality of front nozzles (B1), wherein the first front washer hose (122) and the second front washer hose (222) are merged to be connected to each of the front nozzles (B1) through a first output hose (B11), wherein each of the front nozzles (B1) faces a front windshield.

6. A windshield washer reservoir, comprising:
a first tank (10) for containing first liquid, comprising a first input port (11), a first front pump (12), and a first rear pump (13);
a second tank (20) for containing second liquid, comprising a second input port (21), a second front pump (22), and a second rear pump (23);
a first control device (30), electrically connected to the first front power connector (121), for controlling the first front pump (12) to output the first liquid;
a second control device (40), electrically connected to the second front power connector (221), for controlling the second front pump (22) to output the second liquid;
a third control device (50), electrically connected to the first rear power connector (131), for controlling the first rear pump (13) to output the first liquid; and
a fourth control device (60), electrically connected to a second rear power connector (231), for controlling the second rear pump (23) to output the second liquid;
**characterized in that**
the first front pump (12) comprises a first front power connector (121) and is connected to a first front washer hose (122), wherein the first rear pump (13) comprises a first rear power connector (131) and is connected to a first rear washer hose (132);
wherein the second front pump (22) comprises a second front power connector (221) and is connected to a second front washer hose (222), wherein the second rear pump (23) comprises the second rear power connector (231) and is connected to a second rear washer hose (232), and wherein the first front washer hose (122) and the second front washer hose (222) are merged to be connected to a windshield washer nozzle apparatus (B), wherein the first rear washer hose (132) and the second rear washer hose (232) are merged to be connected to a windshield washer nozzle apparatus (B).

7. The windshield washer reservoir of claim 6, **characterized in that** the capacity of the first tank (10) is greater than the capacity of the second tank (20).

8. The windshield washer reservoir of claim 6, **characterized in that** the first tank (10) and the second tank (20) are joined together side by side.

9. The windshield washer reservoir of claim 6, **characterized in that** there is a predetermined distance between the first tank (10) and the second tank (20).

10. The windshield washer reservoir of claim 6, **characterized in that** the windshield washer nozzle apparatus (B) comprises a plurality of front nozzles (B1) and at least one rear nozzles (B2), wherein the first front washer hose (122) and the second front washer hose (222) are merged to be connected to each of the front nozzles (B1) through a first output hose (B11); wherein the first rear washer hose (132) and the second rear washer hose (232) are merged to be connected to each of the rear nozzles (B2) through the second output hose (B21), wherein the front nozzles (B1) face a front windshield and the rear nozzles (B2) faces a rear windshield.
